# EUROPÄISCHE PATENTANMELDUNG

(11) **EP 0 943 913 A2**
(43) Veröffentlichungstag der Anmeldung: **22.09.1999**
(21) Anmeldenummer: 99101963.9
(22) Anmeldetag: 29.01.1999
(51) Int. Cl.: G01N 22/00

(54) **Verfahren und Einrichtung zum Bestimmen der Zusammensetzung von fluidisierbaren Feststoffpartikeln**

(30) Priorität: 16.03.1998 DE 19811341
(71) Anmelder: WAGNER INTERNATIONAL AG, 9450 Altstätten (CH)
(72) Erfinder: Adams, Horst, Dr., 88149 Nonnenhorn (DE)
(74) Vertreter: Liesegang, Eva

(57) **Zusammenfassung**

Die Erfindung sieht ein Verfahren zum Bestimmen der Zusammensetzung von fluidisierbaren Feststoffpartikeln, wie Farbpulver, vor, bei dem die Feststoffpartikel unter definierten Förderbedingungen durch eine Meß-Resonatorvorrichtung umfassend einen Hochfrequenz-Resonator gefördert werden und in der Meß-Resonatorvorrichtung eine Änderung der Resonanzfrequenz und/oder der Amplitude des Hochfrequenz-Resonators erfaßt wird, die durch die geförderten Feststoffpartikel verursacht wird.

## Beschreibung

Die Erfindung betrifft ein Verfahren und eine Einrichtung zum Bestimmen der Zusammensetzung von fließfähigen oder fluidisierbaren Feststoffpartikeln, die z.B. pulverförmig oder granulatförmig sein können, insbesondere der Zusammensetzung eines Farbpulvers. Die Erfindung betrifft noch spezieller die Bestimmung der Zusammensetzung eines Beschichtungspulvers für eine elektrostatische Beschichtungsanlage hinsichtlich dessen mittlerer Partikelgröße und pysikalischen und/oder chemischen Eigenschaften.

Mit den ständig wachsenden Qualitätsanforderungen in der Pulverbeschichtungstechnik nehmen auch die Anforderungen an die Qualität der zu verarbeitenden Beschichtungspulver ständig zu. Die modernen Pulverbeschichtungsanlagen und -geräte können zum Erreichen einer optimalen Beschichtungsqualität präzise auf das zu versprühende Beschichtungspulver eingestellt werden. Um eine gleichbleibende Qualität zu gewährleisten, ist es notwendig, daß ein mit einer Einstellung erreichtes Qualitätsniveau möglichst störungsfrei über einen langen Zeitraum gehalten werden kann.

Die Fördereinrichtungen und Applikationsgeräte werden fortlaufend weiterentwikelt und erlauben immer spezifischere Einstellungen, d.h. zum Beispiel eine Einstellung der Pulverförderung, so daß bei einer bestimmten Pulverqualität ein vorgegebener oder ein maximaler Durchsatz bei gleichzeitig optimaler elektrostatischer Aufladung des Beschichtungspulvers erreicht wird. Die Pulverqualität spiegelt sich z.B. in der mittleren Partikelgröße, der Korngrößenverteilung und den pysikalischen und/oder chemischen Eigenschaften des Pulvers wieder. Da die Fördereinrichtungen und Applikationsgeräte auf die jeweilige Pulverqualität genau eingestellt werden, wirken sich Qualitätsschwankungen des Beschichtungspulvers sehr stark auf die endgültige Beschichtungsqualität aus. Solche Qualitätsschwankungen können insbesondere dann auftreten, wenn eine neue Pulvercharge zum Einsatz kommt.

Im Stand der Technik wurden bisher zur Untersuchung des Beschichtungspulvers relativ zeitaufwendige und teure chemische Analysen und/oder physikalische Untersuchungen, z.B. zur Bestimmung der Partikelgrößenverteilung des Pulvers, durchgeführt. Um eine gleichbleibende Beschichtungsqualität zu gewährleisten, müßten diese Untersuchungen vor jedem Einsatz einer neuen Pulvercharge durchgeführt werden, was aus Zeit- und Kostengründen nicht praktikabel ist.

Es besteht daher Bedarf nach einer Einrichtung und einem Verfahren zum Charakterisieren der Zusammensetzung eines Beschichtungspulvers auf schnelle und einfache Weise, um einem Pulverbeschichter zumindest die Information zu liefern, ob sich die Zusammensetzung des Beschichtungspulvers im Vergleich zu einer vorhergehenden Pulvercharge verändert hat. Wenn eine Änderung der Pulverqualität erkannt wurde, können von dem Pulverbeschichter die entsprechenden Korrekturen an der Einstellung der Pulverbeschichtungsanlage vorgenommen werden, bzw. die Charge kann im Rahmen der Wareneingangskontrolle zurückgewiesen werden.

Diese Aufgabe wird durch ein Verfahren mit den Merkmalen von Anspruch 1 und eine Einrichtung mit den Merkmalen von Anspruch 6 gelöst.

Das fuidisierbare Beschichtungspulver wird unter definierten Förderbedingungen durch einen Hochfrequenz-Resonator in einer Meß-Resonatorvorrichtung gefördert, und die Resonanzfrequenz und/oder die HF-Amplitude des Hochfrequenz-Resonators werden erfaßt, wobei eine Verschiebung der Resonanzfrequenz oder eine Änderung der Amplitude, die durch das durch den Resonator geförderte Beschichtungspulver ausgelöst werden, erkennen läßt, ob die Zusammensetzung des Beschichtungspulvers, insbesondere hinsichtlich dessen Partikelgröße und dessen physikalisch/chemischen Eigenschaften, sich im Vergleich zu einer vorhergehenden Messung oder im Vergleich zu einer Bezugsgröße verändert hat. Es handelt sich bei der erfindungsgemäßen Lösung also um eine Relativmessung, bei der erfaßt wird, ob sich die Zusammensetzung des zu prüfenden Materials, insbesondere des Beschichtungspulvers, im Vergleich zu einem Bezugswert oder einem vorhergehenden Meßwert oder dergleichen verändert hat.

Die erfaßte Änderung der Resonanzfrequenz und/oder der HF-Amplitude des Hochfrequenz-Resonators kann z.B. mit entsprechenden Werten verglichen werden, die sich bei leerer Meß-Resonatorvorrichtung ergeben.

Vorzugsweise werden die Feststoffpartikel mit einer vorgegebenen Förderluftmenge und Dosierluftmenge nach dem Venturiprinzip gefördert.

Die Erfindung sieht auch eine Einrichtung zum Bestimmen der Zusammensetzung von fluidisierbaren Feststoffpartikeln, wie Farbpulver, vor, mit einer Fördervorrichtung zum Fördern der Feststoffpartikel unter definierten Förderbedingungen und mit einer Meß-Resonatorvorrichtung, die einen Hochfrequenz-Resonator umfaßt, um eine Änderung der Resonanzfrequenz und/oder der HF-Amplitude des Hochfrequenz-Resonators zu erfassen, die durch die geförderten Feststoffpartikel verursacht wird. Die Meß-Resonatorvorrichtung weist spezieller einen Vergleicher auf, um eine Angabe darüber zu liefern, ob sich die Resonanzfrequenz und/oder die HF-Amplitude des Hochfrequenz-Resonators bei Förderung von Feststoffpartikeln einer zweiten Prüfmenge im Vergleich zu einer ersten Prüfmenge verändert hat.

Die Feststoffpartikel können durch eine Trichtervorrichtung mit konstanter Menge pro Zeiteinheit der Meß-Resonatorvorrichtung zugeführt werden. Ein genaueres Ergebnis erhält man jedoch, wenn ein Venturi-Injektor mit einer Förderluftzuführung zum Fördern der Feststoffpartikel zu der Meß-Resonatorvorrichtung verwendet wird. Der Venturi-Injektor hat vorzugsweise auch eine Dosierluftzuführung. Es kann eine Regelvorrichtung zum Einstellen einer definierten Förderluftmenge und/oder Dosierluftmenge vorgesehen sein, die mit der Förderluftzuführung und der Dosierluftzuführung verbunden ist.

Bei der Erfindung wird vorzugsweise der Hochfrequenz-Resonator eingesetzt, der aus den deutschen Patentanmeldungen DE 44 40 046 und DE 196 50 112 bekannt ist, wo er zur Pulverdichtebestimmung eingesetzt wird. Auf die beiden Patentanmeldungen wird Bezug genommen.

Durch den Hochfrequenz-Resonator wird unter genau definierten Bedingungen eine bestimmte Pulvermenge pro Zeit pneumatisch gefördert. Die Förderung erfolgt vorzugsweise mit einem Venturi-Injektor, wobei die Förderluft und gegebenenfalls die Dosierluft präzise gemessen und geregelt werden. Geeignete Luftregelmodule sind in der deutschen Patentanmeldung 197 13 668.0 beschrieben, auf die Bezug genommen wird.

Wenn das Pulver durch den Hochfrequenz-Resonator fließt, ergeben sich eine Verschiebung der Resonanzfrequenz und eine Veränderung der HF-Amplitude des Resonators im Vergleich zu dem leeren Resonator bzw. im Vergleich zu einem Bezugswert. Insbesondere die Frequenzverschiebung eignet sich als Charakterisierungsmerkmal für ein bestimmtes Pulver; d.h. man nutzt die Tatsache aus, daß Pulver mit unterschiedlichen Zusammensetzungen unter sonst gleichen Bedingungen unterschiedliche Frequenzverschiebungen hervorrufen.

Der Grund hierfür liegt im Meßverfahren: die Größe der Frequenzverschiebung ist proportional zur Dielektrizitätskonstanten des Pulvers sowie zur Dichte des Pulvers im Resonatorvolumen. Zwei Effekte werden ausgenutzt:
1) wenn sich die physikalische und/oder chemische Zusammensetzung des Pulvers ändert, ändert sich die Dielektrizitätskonstante;
2) wenn sich das Korngrößenspektrum, d.h. die Verteilung der Partikelgrößen des Pulvers ändert, ändert sich bei ansonsten konstanten Bedingungen (insbesondere bei konstanter Förder- und Dosierluft) die Dichte des Pulvers (d.h. die Anzahl der Partikel pro cm³) im Resonator.

Beide Effekte führen sowohl einzeln als auch in Kombination zu einer Frequenzverschiebung sowie zu einer Änderung der Amplitude, deren Auswertung jedoch etwas aufwendiger ist.

Das erfindungsgemäße Verfahren eignet sich nicht nur zur Bestimmung der Zusammensetzung eines Beschichtungspulvers, sondern auch jedes anderen Materials aus fluidisierbaren oder fließfähigen Feststoffpartikeln, das pulverförmig oder granulatförmig sein kann und sich unter definierten konstanten Bedingungen durch eine Meßleitung und die Meß-Resonatorvorrichtung fördern läßt. Dabei kann mit der Erfindung auf einfachste und schnelle Weise ermittelt werden, ob sich die Zusammensetzung des geförderten Materials z.B. von einer Charge zur nächsten geändert hat.

Diese Information ist z.B. für einen Pulverbeschichter auch dann wertvoll, wenn er die genaue Art der Änderung nicht kennt, weil ohne Änderung der Pulverqualität mit den alten Systemeinstellungen weitergearbeitet werden kann, während bei einer Änderung der Pulverqualität die Systemeinstellungen von einem Fachmann aufgrund von Erfahrungswerten korrigiert werden müssen.

Die Erfindung ist im folgenden anhand einer bevorzugten Ausführungsform, die sich auf die Bestimmung der Zusammensetzung eines Beschichtungspulvers bezieht, mit Bezug auf die Zeichnung näher erläutert. In den Figuren zeigt:
- Figur 1: eine schematische Darstellung einer erfindungsgemäßen Einrichtung zum Bestimmen der Zusammensetzung eines Beschichtungspulvers;
- Figuren 2a und 2b: zeigen eine bevorzugte Ausführungsform der Meß-Resonatorvorrichtung; und
- Figur 3: zeigt den Frequenzverlauf in der Meß-Resonatorvorrichtung.

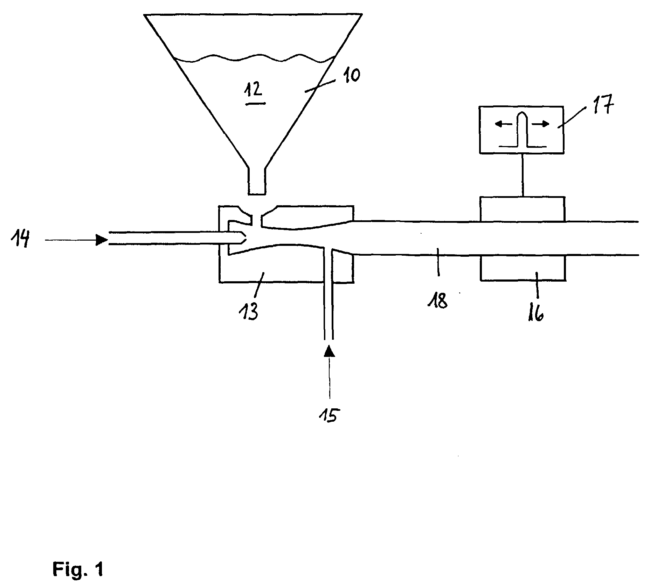

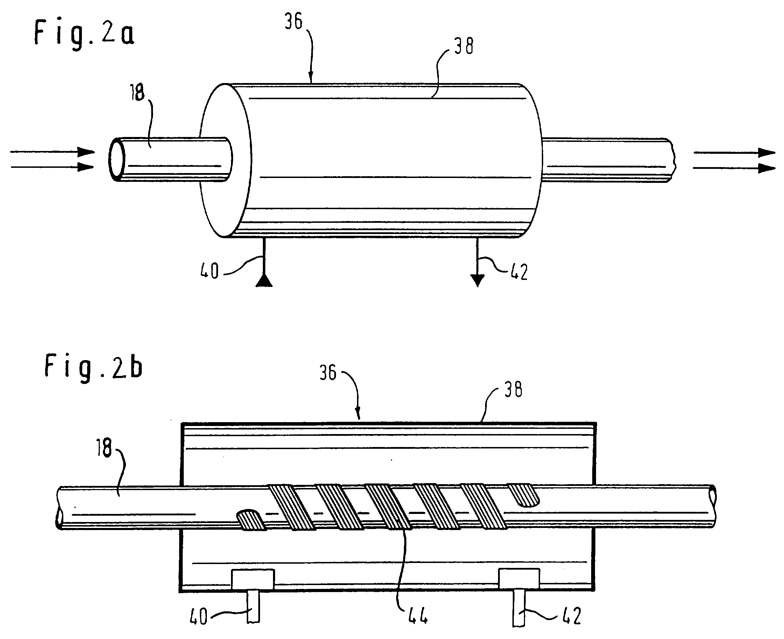

In Figur 1 erkennt man ein trichterförmiges Gefäß 10, in dem sich das zu vermessende Beschichtungspulver 12 befindet. Aus dem Trichtergefäß 10 rieselt das Pulver mit konstanter Menge pro Zeit nach dem Sanduhrprinzip in einen Meß-Förderinjektor 13. Der Meß-Förderinjektor 13 fördert das gesamte Pulver mit definiert eingestellten Werten für die Förderluft 14 und die Dosierluft 15 durch eine Meßleitung 18 und eine Meß-Resonatorvorrichtung 16, die einen Hochfrequenz-Resonator 36 (Fig. 2a, 2b) enthält. Die Resonanzfrequenz des Hochfrequenz-Resonators wird gemessen und auf einem Anzeigegerät 17 angezeigt. Auf dem Anzeigegerät 17 kann entweder die Resonanzfrequenz direkt in Hz oder eine andere geeignete, zu dieser proportionalen Größe angezeigt werden.

Das Meßprinzip ist genauer in den Patentanmeldungen DE 44 40 046 und DE 196 50 112 beschrieben.

Eine bevorzugte Ausführungsform der Meß-Resonatorvorrichtung ist in den Figuren 2a und 2b gezeigt. Die Meßleitung 18 besteht aus einem Glas- oder Keramikrohr, sie kann jedoch auch ein Kunststoffschlauch sein oder eine andere für Beschichtungsanlagen geeignete Förderleitung. Die Meßleitung 18 ist elektrisch nicht-leitend. Sie wird von dem Pulverstrom in Richtung der Pfeile in Fig. 2a durchströmt.

Der Resonator 36 weist für die Abschirmung gegen Störfelder einen Metallzylinder 38 auf, welcher den eigentlichen Resonatorteil 44 umgibt. An dem Metallzylinder 38 sind ein Hochfrequenz-Eingang 40 und ein Hochfrequenz-Ausgang 42 zur Einkopplung von Hochfrequenzwellen und zum Abnehmen der Resonatorspannung vorgesehen. Mit der Hochfrequenz-Einkopplungsstelle 40 und der Hochfrequenz-Auskopplungsstelle 42 können Koaxialkabel verbunden sein, s. Fig. 2b, um den Hochfrequenz-Resonator mit einer Hochfrequenzquelle und einem Spannungsaufnehmer zu verbinden.

Im Inneren des abschirmenden Metallzylinders 38 liegt der Resonator 44 in Form einer Helix oder Spule, welche um die Meßleitung 18 gewickelt ist. Der Hochfrequenz-Resonator gemäß der Erfindung kann als um die Meßleitung 18 gewickelte Drahtspule 44 ausgebildet sein.

Die Grundsätze der Bestimmung der Pulversammensetzung mit dem Hochfrequenz-Resonator 36 sind wie folgt:
Ein Teil des von dem Resonator erzeugten Hochfrequenzfeldes dringt durch die Wand der Meßleitung 18 in dem Pulverstrom. Gemessen werden die Resonanzfrequenz ν₀ des Resonators oder seine Güte Q. Diese Größen sind von folgenden Materialeigenschaften des Mediums im Resonanzbereich abhängig:
- der Dielektrizitätskonstante und
- der Absorption (Verlustfaktor).

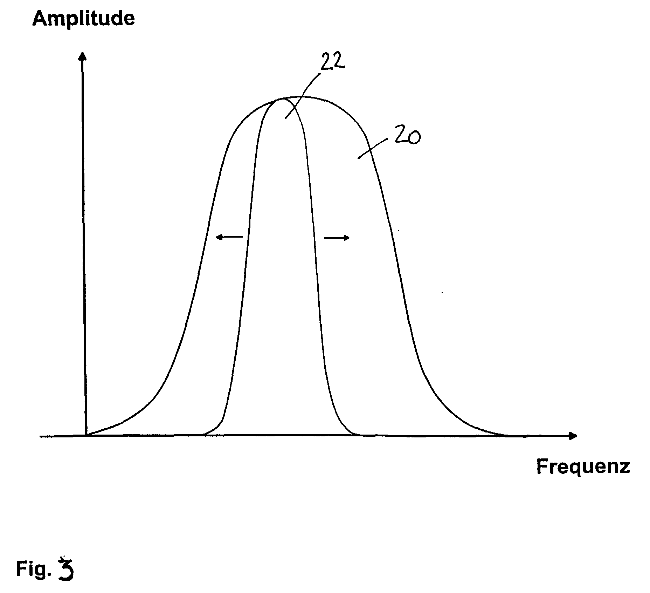

Die Änderungen der Dielektrizitätskonstante und der Absorption sind bei konstanten Förderbedingungen abhängig von der Korngrößenverteilung und den physikalisch/chemischen Eigenschaften des Pulvers im Resonanzbereich oder Resonanzvolumen, welches einen bestimmbaren Abschnitt der Meßleitung 18 umfaßt. Daraus ergibt sich, daß eine Änderung der Pulverqualität im Resonanzvolumen zu einer Verschiebung der Resonanzfrequenz und zu einer Veränderung der Güte und daher der HF-Amplitude führt. In Fig. 3 ist eine Resonanzkurve 22 für eine bestimmte Pulverqualität im Resonanzvolumen gezeigt, wobei in Fig. 3 die Frequenzverschiebung, die sich bei anderen Pulverqualitäten ergäbe, durch Pfeile ohne Berücksichtigung der Änderung der Amplitude aufgrund der veränderten Güte, angedeutet ist. Die Kurve 20 in Fig. 3 grenzt einen Arbeitsbereich des Hochfrequenz-Resonators 36 ein.

Durch Messen der Resonanzfrequenzverschiebung oder der Amplitudenänderung bei unterschiedlichen Pulverqualitäten im Resonanzvolumen ist jeweils die Bestimmung der Pulverzusammensetzung als eine relative Größe möglich. Eine absolute Bestimmung kann durch eine Kalibrierung des Hochfrequenz-Resonators auf eine Bezugs-Resonanzfrequenz und eine Bezugsamplitude für eine vorgegebene bekannte Pulverqualität erfolgen.

Für die Erfindung ist grundsätzlich auch ein System ohne Dosierluft 15 einsetzbar, solange eine Förderung des Pulvers 12 unter konstanten Bedingungen gewährleistet ist. Die Dosierluft 15 ermöglicht allerdings, das Verhältnis von Pulver zu Luft in der Meß-Resonatorvorrichtung 16 so einzustellen, daß eine optimale Empfindlichkeit erzielt wird, weil der Resonator aufgrund seiner geometrischen Abmessungen jeweils einen maximalen Frequenzbereich 20 (Fig. 2) hat, in dem er am besten arbeitet. Das heißt, bei einer zu großen Verschiebung der Resonanzfrequenz, wenn z.B. im Vergleich zum leeren Resonator eine sehr große Pulvermenge durch den Resonator geführt wird, nimmt die verschobene Amplitude des Resonanzsignals 22 (Fig. 2) stark ab und wird für eine zuverlässige Erfassung zu klein. Dies kann mit einer optimalen Einstellung der Pulverdichte mithilfe der Dosierluft 15 vermieden werden.

Die durch das zu vermessende Pulver ausgelöste Resonanzverschiebung in der Meß-Resonatorvorrichtung kann auch mit einer Bezugsresonanz verglichen werden, die nicht der leeren Meßleitung 18 sondern einem Bezugs-Pulvermengenstrom entspricht.

Ebenso ist denkbar, daß, insbesondere wennn ein anderes Material als Beschichtungspulver vermessen werden soll, anstelle des Venturi-Injektors 13 eine andere Förder- und/oder Dosiereinrichtung verwendet wird, um den definierten Materialstrom zu erzeugen. Wenn man die Meßleitung senkrecht anordnet, könnte sogar die Dosierung alleine mit einer Trichtereinrichtung, wie dem Trichtergefäß 12, nach dem Sanduhrprinzip erfolgen, es könnte eine Pumpe oder eine andere Fördereinrichtung zum Einsatz kommen.

Wesentlich ist, daß die zu vermessenden und zu vergleichenden Materialchargen immer unter definierten gleichbleibenden Bedingungen gefördert werden, um zuverlässig festzustellen, ob sich eine Änderung der Zusammensetzung des Materials ergeben hat.

Die in der vorstehenden Beschreibung, den Ansprüchen und der Zeichnung offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zum Bestimmen der Zusammensetzung von fluidisierbaren Feststoffpartikeln, wie Farbpulver, bei dem die Feststoffpartikel unter definierten Förderbedingungen durch eine Meß-Resonatorvorrichtung (16), umfassend einen Hochfrequenz-Resonator (36) gefördert werden und in der Meß-Resonatorvorrichtung eine Änderung der Resonanzfrequenz und/oder der Hochfrequenzamplitude des Hochfrequenz-Resonators erfaßt werden, welche durch die geförderten Feststoffpartikel ausgelöst werden.

2. Verfahren nach Anspruch 1, dadurch **gekennzeichnet**, daß die erfaßte Änderung der Resonanzfrequenz und/oder der Hochfrequenzamplitude des Hochfrequenz-Resonators im Verhältnis zu entsprechenden Werten ermittelt werden, die sich bei leerer Meß-Resonatorvorrichtung ergeben.

3. Verfahren nach Anspruch 1 oder 2, dadurch **gekennzeichnet**, daß die Feststoffpartikel mit einer vorgegebenen Förderluftmenge nach dem Venturiprinzip gefördert werden.

4. Verfahren nach Anspruch 3, dadurch **gekennzeichnet**, daß die Feststoffpartikel mit einer vorgegebenen Dosierluftmenge gefördert werden.

5. Verfahren nach einem der vorangehenden Ansprüche, dadurch **gekennzeichnet**, daß die Resonanzfrequenzen des Hochfrequenz-Resonators für eine erste und eine zweite durch die Meß-Resonatorvorrichtung geförderte Farbpulverprüfmenge ermittelt und verglichen werden, um eine Veränderung der Zusammensetzung des Farbpulvers hinsichtlich dessen chemischen und/oder physikalischen Eigenschaften und/oder dessen Partikelgrößen von der ersten zur zweiten Prüfmenge zu erkennen.

6. Einrichtung zum Bestimmen der Zusammensetzung von fluidisierbaren Feststoffpartikeln, wie Farbpulver mit einer Fördervorrichtung (13) zum Fördern der Feststoffpartikel unter definierten Förderbedingungen, und mit einer Meß-Resonatorvorrichtung (16), die einen Hochfrequenz-Resonator (36) umfaßt, um eine Änderung der Resonanzfrequenz und/oder der Hochfrequenzamplitude des Hochfrequenz-Resonators zu erfassen, die durch die geförderten Feststoffpartikel verursacht wird.

7. Einrichtung nach Anspruch 6, dadurch **gekennzeichnet**, daß die Meß-Resonatorvorrichtung einen Vergleicher aufweist, um eine Angabe darüber zu liefern, ob sich die Resonanzfrequenz und/oder die Hochfrequenzamplitude des Hochfrequenz-Resonators bei Förderung von Feststoffpartikeln einer zweiten Prüfmenge im Vergleich zu einer ersten Prüfmenge verändert hat.

8. Einrichtung nach Anspruch 6 oder 7, **gekennzeichnet** durch eine Trichtervorrichtung (10) zum Abgeben der Feststoffpartikel mit konstanter Menge pro Zeiteinheit an die Meß-Resonatorvorrichtung (16).

9. Einrichtung nach einem der Ansprüche 6 bis 8, **gekennzeichnet** durch einen Venturi-Injektor (13) mit einer Förderluftzuführung (14) zum Fördern der Feststoffpartikel zu der Meß-Resonatorvorrichtung (16).

10. Einrichtung nach Anspruch 9, dadurch **gekennzeichnet**, daß der Venturi-Injektor (13) eine Dosierluftzuführung (15) aufweist.

11. Einrichtung nach Anspruch 9, **gekennzeichnet** durch eine Regelvorrichtung zum Einstellen einer definierten Förderluftmenge und/oder Dosierluftmenge, die mit der Förderluftzuführung (14) und der Dosierluftzuführung (15) verbunden ist.

12. Einrichtung nach einem der Ansprüche 6 bis 11, dadurch **gekennzeichnet**, daß die Meß-Resonatorvorrichtung (16) eine Meßleitung (18) und der Hochfrequenzresonator (36) eine Resonanzspule aufweist, welche die Meßleitung umgibt.

13. Einrichtung nach Anspruch 12, dadurch **gekennzeichnet**, daß die Resonanzspule (44) eine spiralförmig auf die Meßleitung aufgebrachte leitfähige Struktur aufweist.

14. Verwendung der Einrichtung nach einem der Ansprüche 6 bis 13 zur Bestimmung der Zusammensetzung eines Farbpulvers einer Pulvercharge hinsichtlich dessen chemischen und/oder physikalischen Eigenschaften und/oder dessen Partikelgröße im Vergleich zu einer Bezugszusammensetzung.
